# EUROPÄISCHE PATENTANMELDUNG

(11) **EP 1 522 869 A1**
(43) Veröffentlichungstag der Anmeldung: **13.04.2005**
(21) Anmeldenummer: 04018208.1
(22) Anmeldetag: 31.07.2004
(51) Int. Cl.: G01S 7/03, H01Q 3/24, H04B 1/18

(54) **Radarsystem mit umschaltbarer Winkelauflösung**

(30) Priorität: 10.10.2003 DE 10348226
(71) Anmelder: Valeo Schalter und Sensoren GmbH, 74321 Bietigheim-Bissingen (DE)
(72) Erfinder: Ziller, Thomas, 74354 Besigheim (DE); Papziner, Uwe, 74321 Bietigheim-Bissingen (DE)
(74) Vertreter: Meier, Christof

(57) **Zusammenfassung**

Vorgestellt wird ein Radarsystem mit einem Radarsensor (10), der ein Sendemodul (20), ein Empfangsmodul (22) und ein Speisenetzwerk (64) aufweist, wobei das Sendemodul (20)eine erste Vielzahl von Teilantennen (26, 28, 30, 32, 34) aufweist und das Empfangsmodul (22) eine zweite Vielzahl von Teilantennen (46, 48, 50) aufweist, und wobei das Speisenetzwerk (64) in einem ersten Betriebsmodus jeweils wenigstens eine Teilantenne (30) des Sendemoduls (20) zusammen mit wenigstens einer Teilantenne (48) des Empfangsmoduls (22) betreibt, um eine erste, geringe Winkelauflösung zu erzielen und wobei das Speisenetzwerk in einem zweiten Betriebsmodus jeweils eine Gruppe von Teilantennen (26, 28, 30, 32, 34) des Sendemoduls (20) und eine Gruppe von Teilantennen (46, 48, 50) des Empfangsmoduls (22) zusammen betreibt, um eine zweite, hohe Winkelauflösung zu erzielen. Das Radarsystem zeichnet sich dadurch aus, dass das Speisenetzwerk (64) in wenigstens einem weiteren Betriebsmodus jeweils wenigstens eine Teilantenne (30) des Sendemoduls (20) zusammen mit einer Gruppe von Teilantennen (46, 48, 50) des Empfangsmoduls (22), oder eine Gruppe von Teilantennen (26, 28, 30, 32, 34) des Sendemoduls (20) zusammen mit wenigstens einer Teilantenne (48) des Empfangsmoduls (22) betreibt.

## Beschreibung

Die Erfindung betrifft ein Radarsystem mit einem Radarsensor, der ein Sendemodul, ein Empfangsmodul und eine Treiberschaltung aufweist, wobei das Sendemodul eine erste Vielzahl von Teilantennen aufweist und das Empfangsmodul eine zweite Vielzahl von Teilantennen aufweist, und wobei die Treiberschaltung in einem ersten Betriebsmodus jeweils wenigstens eine Teilantenne des Sendemoduls zusammen mit wenigstens einer Teilantenne des Empfangsmoduls betreibt, um eine erste, geringe Winkelauflösung zu erzielen und wobei die Treiberschaltung in einem zweiten Betriebsmodus jeweils eine Gruppe von Teilantennen das Sendemoduls und eine Gruppe von Teilantennen des Empfangsmoduls zusammen betreibt, um eine zweite, hohe Winkelauflösung zu erzielen.

Ferner betrifft die Erfindung ein Verfahren zum Betreiben eines solchen Radarsystems.

Ein solches Radarsystem und ein solches Verfahren sind aus der EP 1 324 068 A2 bekannt.

Radarsensoren werden bei Kraftfahrzeugen im Allgemeinen zur Überwachung der Fahrzeugumgebung eingesetzt, wobei Anwendungen wie Einparkhilfe, Totwinkelüberwachung, Unfall-Antizipierung (Pre-Crash Sensing), Start/Stopp-Betrieb oder Fahrbetrieb mit Abstandsüberwachung und/oder -regelung (Cruise Control-Unterstützung) in Frage kommen. Dabei unterscheiden sich die Anforderungen an die Winkelauflösung von Anwendung zu Anwendung.

Für eine Nahfeldüberwachung toter Winkel (Blind-Spot-Detection) ist eine breites Strahlungsfeld erforderlich. Eine gute Winkelauflösung ist dagegen weniger wichtig. Zum Beispiel ist es beim Rangieren eines Kraftfahrzeuges wichtig, zu wissen, ob sich etwas im toten Winkel befindet, weil dann sofort angehalten werden muss. Es ist dagegen weniger wichtig zu wissen, wo sich das Objekt genau befindet, weil ohnehin angehalten werden muss.

Auf der anderen Seite ist es für eine Abstandsüberwachung längs einer Fahrspur wichtig, dass Abstandsinformationen nicht durch Fahrzeuge auf benachbarten Fahrspuren gestört werden, was ein höhere Winkelauflösung erfordert. Um verschiedene Winkelauflösungserfordernisse mit einem einzigen Radarsensor abdecken zu können, ist es wünschenswert, die Winkelauflösung umschalten oder umsteuern zu können.

Zu diesem Zweck werden nach der EP 1 324 068 A2 kammartig ineinander greifende Teilantennen eines Sendemoduls und eines Empfangsmoduls entweder als einzelne Paare aus Sende-Teilantenne und Empfangs-Teilantenne oder als Gruppen (sets) benachbarter Teilantennen betrieben. Dabei stellen sich in den zwei unterschiedlichen Betriebsmodi zwei unterschiedliche azimutale Winkelauflösungen ein. Bei dem Gegenstand der EP 1 324 068 A2 ist jede Teilantenne über einen eigenen, separaten Schalter mit einer Treiberschaltung verbunden. Durch die Vielzahl der Schalter und der zugehörigen Ansteuerpfade ist der Flächenverbrauch einer solchen Anordnung vergleichsweise groß. Dies gilt insbesondere dann, wenn man ihn zu der beschränkten Anzahl der Betriebsmodi, die nur zwischen einer hohen azimutalen Auflösung und einer geringen azimutalen Auflösung unterscheiden, in Beziehung setzt.

Vor diesem Hintergrund besteht die Aufgabe der Erfindung in der Angabe eines Radarsystems mit schaltbarer Winkelauflösung, das eine Vielfalt von Betriebsmodi mit einem minimalen Flächenverbrauch und Schaltungsaufwand ermöglicht.

Diese Aufgabe wird bei einem Radarsystem der eingangs genannten Art dadurch gelöst, dass die Treiberschaltung in wenigstens einem weiteren Betriebsmodus jeweils wenigstens eine Teilantenne des Sendemoduls zusammen mit einer Gruppe von Teilantennen des Empfangsmoduls, oder eine Gruppe von Teilantennen des Sendemoduls zusammen mit wenigstens einer Teilantenne des Empfangsmoduls betreibt.

Darüber hinaus wird diese Aufgabe bei einem Verfahren der eingangs genannten Art dadurch gelöst, dass, in wenigstens einem weiteren Betriebsmodus, wenigstens eine Teilantenne des Sendemoduls zusammen mit einer Gruppe von Teilantennen des Empfangsmoduls, oder eine Gruppe von Teilantennen des Sendemoduls zusammen mit wenigstens einer Teilantenne des Empfangsmoduls betrieben wird.

Durch diese Kombinationen werden unterschiedliche Winkelbereiche, in denen der Radarsensor reflektierende Objekte erfasst, durch geschickte Kombination von Teilantennen des Sendemoduls und des Empfangsmoduls mit minimalem Schaltungsaufwand realisiert. Dabei wird ausgenutzt, dass sich der genannte Winkelbereich sowohl in einem Abstrahlwinkelbereich der Sende-Teilantenne(n) als auch in einem Empfangswinkelbereich der Empfangs-Teilantenne(n) befinden muss.

Durch mit geringem Aufwand ümschaltbare Kombinationen aus schmalen oder breiten Abstrahlwinkelbereichen mit schmalen oder breiten Empfangswinkelbereichen ergeben sich bereits bei nur zwei unterschiedlichen Breiten durch die Kombinationen breit/breit; breit/schmal; schmal/breit und schmal/schmal bis zu vier unterschiedliche Winkelbereiche, zwischen denen durch einen oder zwei Umschaltvorgänge ausgewählt werden kann. Als Folge wird gegenüber dem angegebenen Stand der Technik nur eine wesentlich geringere Anzahl von Hochfrequenzschaltern und zugehörigen Ansteuerpfaden benötigt, was den Flächenverbrauch und den schaltungstechnischen Aufwand bei der Herstellung der Sendemodule und Empfangsmodule erheblich verringert. Dadurch wird die Aufgabe der Erfindung vollkommen gelöst.

Es ist bevorzugt, dass die Treiberschaltung in dem ersten Betriebsmodus genau eine Teilantenne des Sendemoduls zusammen mit genau einer Teilantenne des Empfangsmoduls betreibt.

Da einzelne Teilantennen im Vergleich zu einer Mehrzahl synchron betriebener Teilantennen eine breite Abstrahlcharakteristik und Empfangscharakteristik besitzen, ergibt sich in diesem Betriebsmodus eine geringe Winkelauflösung. Die geringe Winkelauflösung ist jedoch mit einem breiten Detektionsbereich in der Nähe des Radarsensors verbunden, so dass sich dieser Betriebsmodus besonders gut für eine Überwachung einer engeren Fahrzeugumgebung eignet, mit der zum Beispiel Objekte in toten Winkeln (blind spots) eines Sichtfeldes eines Fahrers erfasst werden können.

Bevorzugt ist auch, dass die Gruppe von Teilantennen jeweils auch die wenigstens eine Teilantenne umfasst, die im ersten Betriebsmodus betrieben wird.

Durch diese Maßnahme wird der Schaltungsaufwand weiter verringert, da ein Abschalten der einen Teilantenne entfällt. Die Umschaltung wird durch Zuschalten der übrigen Teilantennen an eine bereits bestehende Verbindung mit minimalem Aufwand realisiert.

Ferner ist bevorzugt, dass die Gruppe von Teilantennen sämtliche Teilantennen des Sendemoduls oder des Empfangsmoduls umfasst.

Durch diese Ausgestaltung wird eine Abstrahlcharakteristik oder eine Empfangscharakteristik mit einer minimalen Winkelbreite erzeugt. Eine minimale Winkelbreite ist sehr gut für eine Überwachung weiter entfernter Bereiche geeignet. So ist es zum Beispiel für ein Abstandsregelsystem wichtig, dass Informationen über den Abstand zu einem auf der gleichen Fahrspur vorausfahrenden Auto nicht durch Fahrzeuge auf benachbarten Fahrspuren gestört werden. Es ist daher wünschenswert, eine einzelne Fahrspur in einem Abstand von typischerweise 30 bis 100 Metern auflösen zu können.

Eine weitere bevorzugte Ausgestaltung zeichnet sich dadurch aus, dass die Teilantennen, die im ersten Betriebsmodus zusammen betrieben werden, separat mit der Treiberschaltung verbunden sind.

Durch diese Ausgestaltung wird der schaltungstechnische Aufwand minimiert. Da die Teilantennen für den ersten Betriebsmodus auch in den anderen Betriebsmodi aktiv sind, können sie unabhängig von einer Betriebsmodi-Umschaltung mit der Treiberschaltung verbunden sein.

Bevorzugt ist auch, dass die übrigen Teilantennen einer Gruppe durch einen gemeinsamen Schalter mit der Treiberschaltung verbunden werden.

Auch diese Ausgestaltung trägt zu einer Minimierung der Schalterzahl und der Zahl der Ansteuerpfade bei, was den Flächenverbrauch des Radarsensors verringert.

Ferner ist bevorzugt, dass sich die Teilantennen jeweils aus mehreren schlitzgekoppelten Patchantennen zusammensetzen.

Aus solchen planaren Antennen-Grundelementen lassen sich durch periodische Anordnung der Antennen-Grundelemente Gruppenstrahler aufbauen, deren Dimensionierung und geometrische Anordnung die Abstrahlrichtung, also die Feldverteilung vor der Antenne, bestimmt. Durch geeignete phasengesteuerte Anregung der periodisch angeordneten Antennen-Grundelemente lässt sich eine Abtastung verschiedener Raumrichtungen ohne Änderung der geometrischen Ausrichtung des Radarsensors erzielen (Prinzip des Phased Array Radars).

Ein Vorteil der planaren Antennenstrukturen gegenüber konventionellen Antennen liegt darin, dass sie sich in kostengünstiger und kompakter Leichtbauweise fertigen lassen und dass sie leicht in Mikrostreifenleitungsschaltungen für weite Frequenzbereichen (etwa 100 MHz bis 100 GHz) integriert werden können. Die geringe Dicke des Metalls der Strahlungsflächen sowie die Tatsache, dass bei den elektrisch leitfähigen Flächen der Patches keine sehr gute elektrische Leitfähigkeit benötigt wird, lässt viele verschiedene Herstellungsmethoden zu.

Eine weitere bevorzugte Ausgestaltung zeichnet sich dadurch aus, dass das Sendemodul räumlich getrennt von dem Empfangsmodul auf dem Radarsensor angeordnet ist.

Auch diese Ausgestaltung trägt zu einem geringeren Flächenverbrauch bei, da sich aufgrund der räumlichen Zusammenfassung der Sende-Teilantennen und der Empfangs-Teilantennen in der Summe kürzere Treiberpfade und Ansteuerpfade für zugeordnete Schalter realisieren lassen.

Bevorzugt ist auch, dass die Zahl der Teilantennen des Sendemoduls von der Zahl der Teilantennen des Empfangsmoduls abweicht.

Durch diese Asymmetrie wird insbesondere erreicht, dass sich die Kombinationen schmal/breit und breit schmal unterscheiden. Dadurch werden beispielsweise bei der oben genannten Ausgestaltung effektiv vier verschiedene Winkelauflösungen mit minimalem Aufwand bereitgestellt.

Ferner ist bevorzugt, dass jede Teilantenne wenigstens zwei längs einer Linie angeordnete Strahlungsflächen aufweist.

Durch diese Ausgestaltungen können bereits die Teilantennen selbst eine konstruktiv vorgebbare Richtcharakteristik erhalten, wobei das jeweilige Strahlungsfeld mit zunehmender Zahl von Strahlungsflächen schmaler und damit winkelgenauer wird.

Bevorzugt ist auch, dass der Radarsensor in wenigstens einem Betriebsmodus gepulst betrieben wird.

Den Vorteilen von Patchantennen steht als Nachteil eine vergleichsweise geringe Frequenzbandbreite gegenüber. Eine große Bandbreite ist jedoch wünschenswert, da sich die örtliche Auflösung reflektierender Objekte, also der kleinstmögliche Abstand, bei dem zwei getrennte Objekte als getrennt erkannt werden, mit zunehmender Bandbreite verbessert. Der gepulste Betrieb vergrößert die eingeschränkte Bandbreite, da die Zeitdauer delta_t eines Signal und der von ihm beanspruchte Frequenzbedarf, d.h. die Bandbreite, umgekehrt proportional zueinander sind.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: eine Gesamtansicht eines Radarsensors;
- Fig. 2: einen Teilschnitt des Radarsensors aus der Fig. 1;
- Fig. 3: verschiedene Ansteuermuster von Teilantennen des Radarsensors nach der Fig. 1;
- Fig. 4: verschiedene Winkelauflösungen, die sich als Folge der Ansteuermuster nach der Fig. 3 einstellen;
- Fig. 5: ein erstes Ausführungsbeispiel einer Schaltung zur Ansteuerung verschiedener Gruppen von Teilantennen; und
- Fig. 6: ein zweites Ausführungsbeispiel einer Schaltung zur Ansteuerung verschiedener Gruppen von Teilantennen.

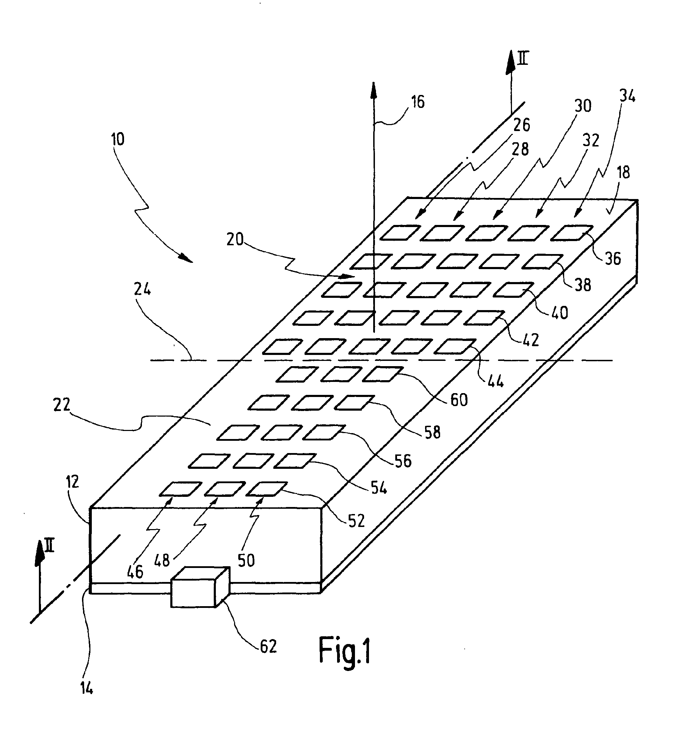

Die Ziffer 10 in der Figur 1 bezeichnet die schematische Gesamtansicht eines Radarsensors mit einem Gehäuse 12, das von einem Deckel 14 abgeschlossen wird. Der mit der Ziffer 16 bezeichnete Pfeil gibt die Richtung der Längsachse eines Kraftfahrzeugs an. Die Anordnung des Radarsensors 10 relativ zu der Richtung 16 entspricht einer typischen Einbaulage zur Überwachung des Vorfeldes eines Kraftfahrzeugs. Die Erfindung ist aber selbstverständlich nicht auf eine solche relative Ausrichtung des Radarsensors 10 zur Richtung 16 der Längsachse des Kraftfahrzeugs beschränkt.

Auf einer Stirnfläche 18 des Radarsensors 10 ist ein flächiges Sendemodul 20 angeordnet, das von einem flächigen Empfangsmodul 22 durch eine gedachte Linie 24 getrennt wird. Der in der Fig. 1 dargestellte Radarsensor 10 weist also eine räumliche Trennung von Sendemodul 20 und Empfangsmodul 22 auf. Im Beispiel der Fig. 1 weist das Sendemodul 20 fünf Teilantennen 26, 28, 30, 32 und 34 auf, die aus je fünf Strahlungsflächen (Patches) 36, 38, 40, 42, und 44 bestehen. Analog weist das Empfangsmodul im Beispiel der Fig. 1 drei Teilantennen 46, 48, 50 auf, die aus jeweils fünf Strahlungsflächen 52, 54, 56, 58 und 60 bestehen.

Es versteht sich, dass das Sendemodul 20 an Stelle von fünf Teilantennen allgemein k Teilantennen mit je 1 Strahlungsflächen und das Empfangsmodul 22 an Stelle von drei Teilantennen auch m Teilantennen mit je n Strahlungsflächen aufweisen kann. Dabei kann die Zahl der Teilantennen des Sendemoduls von der Zahl der Teilantennen des Empfangsmoduls abweichen. Jede der Teilantennen setzt sich aus mehreren Patchantennen oder Strahlungsflächen zusammen, die linienhaft angeordnet sind. Die Patchantennen können schlitzgekoppelt angeregt werden. Die Ziffer 62 bezeichnet ein Anschlusselement, über das dem Radarsensor 10 beispielsweise eine Versorgungsspannung zugeführt wird und/oder über das der Radarsensor 10 Signale an Steuergeräte eines Kraftfahrzeugs ausgibt.

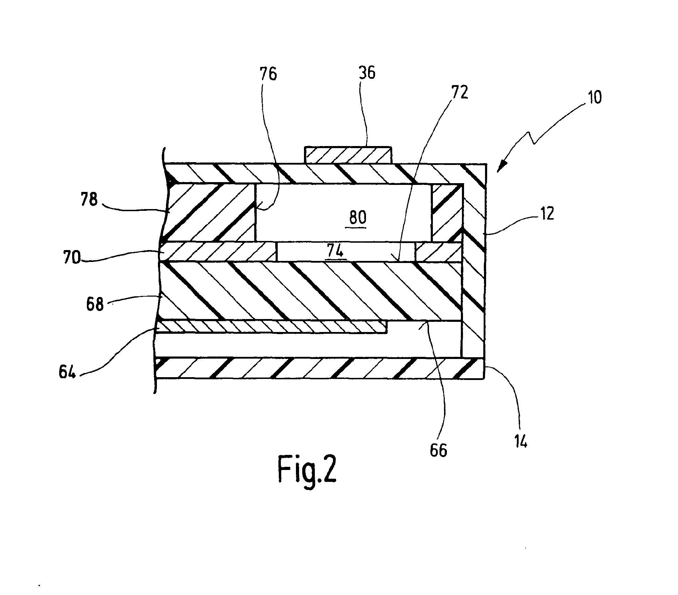

Figur 2 zeigt den Radarsensor 10 nach Figur 1 im Teilschnitt, wobei der in der Figur 2 dargestellte innere Aufbau des Radarsensors 10 per se bekannt ist. In der Figur 2 bezeichnet die Ziffer 64 ein Speisenetzwerk, das mit dem Anschlusselement 62 aus Figur 1 in Verbindung steht und auf einer ersten Seite 66 eines Hochfrequenzsubstrates 68 angeordnet ist. Eine metallische Massefläche 70 ist auf einer zweiten Seite 72 des Hochfrequenzsubstrates 68 angeordnet.

Eine Strahlungsfläche 36 wird über eine Apertur 74 in der metallischen Massefläche 70 und über ein zwischen der Massefläche 70 und der Strahlungsfläche 36 angeordnetes Dielektrikum von dem Speisenetzwerk 64 zur Abstrahlung elektromagnetischer Wellen angeregt. Eine Ausnehmung 76 in einer Verstärkungsstruktur 78 definiert ein Luftvolumen 80 zwischen der Strahlungsfläche 36 und der Massefläche 70. Das Luftvolumen 80 bildet das Dielektrikum zwischen der Massefläche 70 und der Strahlungsfläche 36 dar.
Die Strahlungsfläche 36 ist mit dem Gehäuse 12 verbunden und bevorzugt außen auf dem Gehäuse 12 angeordnet. Die Strahlungsfläche 36 wirkt als Resonator, der von dem Speisenetzwerk 64 durch kapazitive Kopplung zur Abstrahlung elektromagnetischer Wellen angeregt wird. Die Apertur 74 ist in der Regel als länglicher Schlitz ausgeführt.

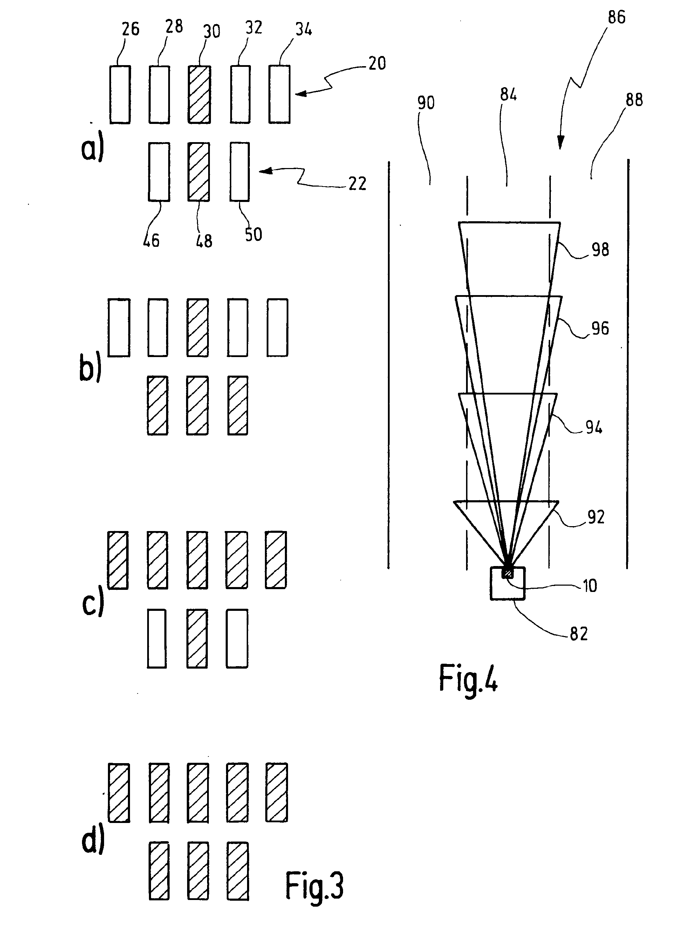

In der Fig. 3 sind vier verschiedener Ansteuermuster dargestellt, mit denen das Speisenetzwerk 64 die fünf Teilantennen 26 bis 34 des Sendemoduls 20 und die drei Teilantennen 46 bis 50 des Empfangsmoduls 22 in vier verschiedenen Betriebsmodi betreibt.

Dabei entspricht die Konstellation nach der Fig. 3a, bei der jeweils eine Teilantenne 30 des Sendemoduls 20 zusammen mit einer Teilantenne 48 des Empfangsmoduls 22 betrieben wird, der oben genannten Kombination breit/breit. In der Fig. 4, die ein Fahrzeug 82 auf einer mittleren Fahrspur 84 einer dreispurigen Straße 86 mit einer rechten Fahrspur 88 und einer linken Fahrspur 90 zeigt, führt dieser Betriebsmodus zu einem breiten Sichtfeld 92 des Radarsensors 10, das sich gut für eine Überwachung eines toten Winkels im Blickfeld des Fahrers unmittelbar vor dem Fahrzeug 82 eignet.

Die Konstellation nach der Fig. 3a zeigt damit ein Radarsystem, bei dem das Speisenetzwerk 64 in einem ersten Betriebsmodus genau eine Teilantenne 30 des Sendemoduls 20 zusammen mit genau einer Teilantenne 48 des Empfangsmoduls 22 betreibt.

Bei dem Ansteuermuster nach der Fig. 3b wird durch Ansteuern nur einer einzigen Teilantenne 30 des Sendemoduls 20 ein breites Abstrahlspektrum erzeugt und mit einer schmaleren Winkelauflösung des Empfangsmoduls 22 kombiniert. Die schmalere Winkelauflösung des Empfangsmoduls 22 wird durch Ansteuern einer Gruppe von Teilantennen 46, 48, 50 des Empfangsmoduls 22 erzeugt. In der Summe ergibt sich aus dieser Kombination ein schmaleres Sichtfeld 94, wie es in der Fig. 4 dargestellt ist.

Dabei umfasst die Gruppe von Teilantennen 46, 48, 50 bevorzugt auch die wenigstens eine Teilantenne 48, die im ersten Betriebsmodus nach der Fig. 3a betrieben wird. Weiter bevorzugt, aber nicht zwingend, umfasst die Gruppe von Teilantennen sämtliche Teilantennen 46, 48, 50 des Empfangsmoduls 22, wie es in der Fig. 3b dargestellt ist.

Ein noch schmaleres Sichtfeld wird mit dem Ansteuermuster der Fig. 3c erzeugt. Dort wird zunächst eine sehr schmale Abstrahlcharakteristik des Sendemoduls 20 durch Ansteuern einer Gruppe von Teilantennen 26, 28, 30, 32, 34 des Sendemoduls 20 erzeugt. Diese sehr schmale Abstrahlcharakteristik wird mit einer breiten oder groben Winkelauflösung des Empfangsmoduls 22 kombiniert, die durch Aktivieren einer einzigen Teilantenne 48 des Empfangsmoduls 30 erzeugt wird. In der Summe ergibt sich aus dieser Kombination das in der Fig. 4 mit der Ziffer 96 bezeichnete Sichtfeld, das gegenüber dem Sichtfeld 94 schmaler ist.

Bevorzugt umfasst die Gruppe der angesteuerten Teilantennen 26, 28, 30, 32, 34 des Sendemoduls 20 auch die wenigstens eine Teilantenne 30, die im ersten Betriebsmodus nach der Fig. 3a betrieben wird. Weiter bevorzugt, aber nicht zwingend, umfasst die Gruppe von Teilantennen sämtliche Teilantennen 26, 28, 30, 32, 34 des Sendemoduls 20, wie es in der Fig. 3c dargestellt ist.

Der Unterschied zwischen den Sichtfeldern 94 und 96 in der Fig. 4 ergibt sich daraus, dass an der Erzeugung des Sichtfeldes 96 insgesamt sechs Teilantennen 26, 28, 30, 32, 34 und 48 beteiligt sind, während das Sichtfeld 94 durch vier Teilantennen 30 und 46, 48, 50 erzeugt wird.

Fig. 3d zeigt schließlich ein Ansteuermuster, das zu einer maximal feinen Winkelauflösung führt. Dazu wird eine schmale Abstrahlcharakteristik mit einem schmalen Empfangswinkel einer schmalen Winkelauflösung des Empfangsmoduls 22 kombiniert. Für die schmale Abstrahlcharakteristik werden sämtliche Teilantennen 26, 28, 30, 32, 34 des Sendemoduls 20 und Teilantennen 46, 48, 50 des Empfangsmoduls 22 zusammen betrieben. Das resultierende schmale Sichtfeld 98 des Radarsensors 10 ist ebenfalls in der Fig. 4 dargestellt. Wie aus der Fig. 4 ersichtlich ist, eignet sich das Sichtfeld 98 am besten für eine Abstandsüberwachung, da es auch in größerer Entfernung vor dem Radarsensor 10 und dem Fahrzeug 82 noch keine Überdeckung mit den benachbarten Fahrspuren 88 und 90 aufweist. Allerdings weist es den Nachteil eines großen toten Winkels unmittelbar vor dem Fahrzeug 82 auf.

Durch eine geeignete Steuerung wird zyklisch oder bedarfsabhängig zwischen den verschiedenen Betriebsmodi der Fig. 3 umgeschaltet. Ein mögliches Kriterium für den Bedarf stellt die Fahrgeschwindigkeit dar. Bei hoher Geschwindigkeit werden schmale Sichtfelder in der Regel nützlicher sein und bei niedrigen Geschwindigkeiten werden breite Sichtfelder nützlicher sein.

Eine Kombination der Figuren 1 bis 4 offenbart damit ein Radarsystem mit einem Radarsensor 10, der ein Sendemodul 20, ein Empfangsmodul 22 und ein Speisenetzwerk 64 aufweist, wobei das Sendemodul 20 eine erste Vielzahl von Teilantennen 26, 28, 30, 32, 34 aufweist und das Empfangsmodul 22 eine zweite Vielzahl von Teilantennen 46, 48, 50 aufweist, und wobei das Speisenetzwerk 64 in einem ersten Betriebsmodus (Fig. 3a) jeweils wenigstens eine Teilantenne 30 des Sendemoduls 20 zusammen mit wenigstens einer Teilantenne 48 des Empfangsmoduls 22 betreibt, um eine erste, geringe Winkelauflösung mit einem breiten Sichtfeld 92 zu erzielen und wobei das Speisenetzwerk 64 in einem zweiten Betriebsmodus (Fig. 3d) jeweils eine Gruppe von Teilantennen 26, 28, 30, 32, 34 des Sendemoduls 20 und eine Gruppe von Teilantennen 46, 48, 50 des Empfangsmoduls 22 zusammen betreibt, um eine zweite, hohe Winkelauflösung mit einem schmalen Sichtfeld 98 zu erzielen. Zusätzlich betreibt das Speisenetzwerk 64 in wenigstens einem weiteren Betriebsmodus (Fig. 3b) jeweils wenigstens eine Teilantenne 30 des Sendemoduls 20 zusammen mit einer Gruppe von Teilantennen 46, 48, 50 des Empfangsmoduls 22, oder (Fig. 3c) eine Gruppe von Teilantennen 26, 28, 30, 32, 34 des Sendemoduls 20 zusammen mit wenigstens einer Teilantenne 48 des Empfangsmoduls 22.

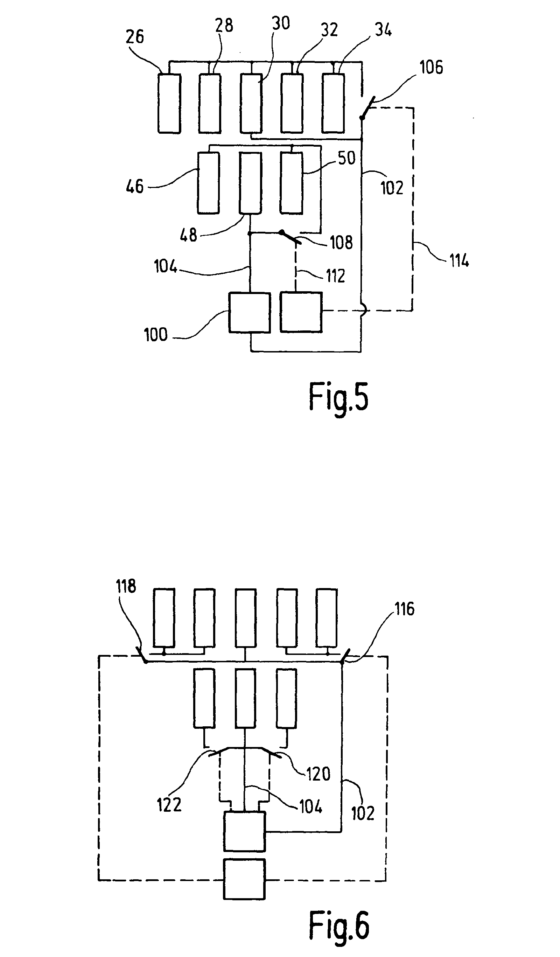

Fig. 5 zeigt die Anordnung der Teilantennen 26, 28, 30, 32, 34 und 46, 48 50 zusammen mit einer ersten Ausgestaltung des Speisenetzwerks 64. Diese Ausgestaltung zeichnet sich zunächst dadurch aus, dass die Teilantennen 30, 48, die im ersten Betriebsmodus zusammen betrieben werden, jeweils separat mit einer Erregerteilschaltung 100 des Speisenetzwerks 64 verbunden sind. Dabei erfolgt der Anschluss der Teilantenne 30 über einen Pfad 102 und der Anschluss der Teilantenne 48 erfolgt über einen Pfad 104. Weiter zeichnet sich die Ausgestaltung nach der Fig. 5 dadurch aus, dass die übrigen Teilantennen einer Gruppe durch je einen gemeinsamen Schalter 106, 108 mit der Erregerteilschaltung 100 verbunden werden. In der Ausgestaltung nach der Fig. 5 wird die über den Schalter 106 geschaltete Gruppe durch sämtliche übrigen Teilantennen 26, 28, 32, 34 des Sendemoduls 20 definiert. Analog wird die über den Schalter 108 geschaltete Gruppe durch sämtliche übrige Teilantennen 46, 50 des Empfangsmoduls 22 definiert.

Die Schalter 106 und 108 werden von einer Steuerung 110 über Pfade 112 und 114 betätigt. Die Steuerung 110 kann in den Radarsensor 10 integriert sein oder als externe Steuerung realisiert sein, die mit dem Speisenetzwerk 64 über das Anschlusselement 62 kommuniziert. Als externe Steuerungen kommen insbesondere ein Motorsteuergerät und/oder ein Bremsensteuergerät und/oder ein Airbag-Steuergerät des Fahrzeugs 82 in Frage.

Die Steuerung 110 steuert Verfahren zum Betreiben des Radarsensors 10 und steuert insbesondere die Umschaltung zwischen verschiedenen Betriebsmodi, wie sie exemplarisch an Hand der Figuren 3 und 4 erläutert wurden. Dabei kann der Radarsensor 10 in wenigstens einem Betriebsmodus gepulst betrieben werden, um die Winkelauflösung weiter zu verbessern.

Fig. 6 zeigt eine Anordnung der Teilantennen 26, 28, 30, 32, 34 und 46, 48, 50 zusammen mit einer zweiten Ausgestaltung des Speisenetzwerks 64. Die zweite Ausgestaltung nach der Fig. 6 unterscheidet sich von der ersten Ausgestaltung nach der Fig. 5 dadurch, dass ein Einzelschalter 106 durch zwei Schalter 116, 118 ersetzt wurde und dass ein Einzelschalter 108 durch zwei Schalter 120, 122, ersetzt wurde. Dadurch können die Pfade 102 und 104 kürzer ausfallen als bei dem Gegenstand der Fig. 5.

## Patentansprüche

1. Radarsystem mit einem Radarsensor (10), der ein Sendemodul (20), ein Empfangsmodul (22) und ein Speisenetzwerk (64) aufweist, wobei das Sendemodul (20)eine erste Vielzahl von Teilantennen (26, 28, 30, 32, 34) aufweist und das Empfangsmodul (22) eine zweite Vielzahl von Teilantennen (46, 48, 50) aufweist, und wobei das Speisenetzwerk (64) in einem ersten Betriebsmodus jeweils wenigstens eine Teilantenne (30) des Sendemoduls (20) zusammen mit wenigstens einer Teilantenne (48) des Empfangsmoduls (22) betreibt, um eine erste, geringe Winkelauflösung zu erzielen und wobei das Speisenetzwerk in einem zweiten Betriebsmodus jeweils eine Gruppe von Teilantennen (26, 28, 30, 32, 34) des Sendemoduls (20) und eine Gruppe von Teilantennen (46, 48, 50) des Empfangsmoduls (22) zusammen betreibt, um eine zweite, hohe Winkelauflösung zu erzielen, **dadurch gekennzeichnet, dass** das Speisenetzwerk (64) in wenigstens einem weiteren Betriebsmodus jeweils wenigstens eine Teilantenne (30) des Sendemoduls (20) zusammen mit einer Gruppe von Teilantennen (46, 48, 50) des Empfangsmoduls (22), oder eine Gruppe von Teilantennen (26, 28, 30, 32, 34) des Sendemoduls (20) zusammen mit wenigstens einer Teilantenne (48) des Empfangsmoduls (22) betreibt.

2. Radarsystem nach Anspruch 1, **dadurch gekennzeichnet, dass** das Speisenetzwerk (64) in dem ersten Betriebsmodus genau eine Teilantenne (30) des Sendemoduls (20) zusammen mit genau einer Teilantenne (48) des Empfangsmoduls (22) betreibt.

3. Radarsystem nach Anspruch 1 oder 2, **dadurch gekennzeichnet, dass** die Gruppe von Teilantennen (26, 28, 30, 32, 34; 46, 48, 50) jeweils auch die wenigstens eine Teilantenne (30; 48) umfasst, die im ersten Betriebsmodus betrieben wird.

4. Radarsystem nach einem der vorhergehenden Ansprüche, **dadurch gekennzeichnet, dass** die Gruppe von Teilantennen (26, 28, 30, 32, 34; 46, 48, 50) sämtliche Teilantennen (26, 28, 30, 32, 34) des Sendemoduls (20) oder sämtliche Teilantennen (46, 48, 50) des Empfangsmoduls (22) umfasst.

5. Radarsystem nach einem der vorhergehenden Ansprüche, **dadurch gekennzeichnet, dass** die Teilantennen (30, 48), die im ersten Betriebsmodus zusammen betrieben werden, separat mit einer Erregerschaltung (100) des Speisenetzwerks (64) verbunden sind.

6. Radarsystem nach einem vorhergehenden Ansprüche, **dadurch gekennzeichnet, dass** die übrigen Teilantennen (26, 28, 32, 34; 48, 50) einer Gruppe durch einen gemeinsamen Schalter (106; 108)mit der Erregerteilschaltung (100) verbunden werden.

7. Radarsystem nach wenigstens einem der vorhergehenden Ansprüche, **dadurch gekennzeichnet, dass** sich die Teilantennen (26, 28, 30, 32, 34, 46, 48, 50) jeweils aus mehreren schlitzgekoppelten Patchantennen (36) zusammensetzen.

8. Radarsystem nach wenigstens einem der vorhergehenden Ansprüche, **dadurch gekennzeichnet, dass** das Sendemodul (20) räumlich getrennt von dem Empfangsmodul (22) auf dem Radarsensor (10) angeordnet ist.

9. Radarsystem nach wenigstens einem der vorhergehenden Ansprüche, **dadurch gekennzeichnet, dass** die Zahl der Teilantennen (26, 28, 30, 32, 34) des Sendemoduls (20) von der Zahl der Teilantennen (46, 48, 50) des Empfangsmoduls (22) abweicht.

10. Radarsystem nach Anspruch 7, **dadurch gekennzeichnet, dass** jede Teilantenne (26, 28, 30, 32, 34, 46, 48, 50) wenigstens zwei längs einer Linie angeordnete Strahlungsflächen (36) aufweist.

11. Radarsystem nach wenigstens einem der vorhergehenden Ansprüche, **dadurch gekennzeichnet, dass** der Radarsensor (10) in wenigstens einem Betriebsmodus gepulst betrieben wird.

12. Verfahren zum Betreiben eines Radarsystems mit einem Radarsensor (10), der ein Sendemodul (20), ein Empfangsmodul (22) und ein Speisenetzwerk (64) aufweist, wobei das Sendemodul (20) eine erste Vielzahl von Teilantennen (26, 28, 30, 32, 34) aufweist und das Empfangsmodul (22) eine zweite Vielzahl von Teilantennen (46, 48, 50) aufweist, wobei jeweils wenigstens eine Teilantenne (28) des Sendemoduls (20) in einem ersten Betriebsmodus zusammen mit wenigstens einer Teilantenne (30) des Empfangsmoduls (22) betrieben wird, um eine erste, geringe Winkelauflösung zu erzielen und wobei jeweils eine Gruppe von Teilantennen (22, 24, 26, 28, 30, 32) das Sendemoduls (20) und eine Gruppe von Teilantennen (46, 48, 50) des Empfangsmoduls (22) in einem zweiten Betriebsmodus zusammen betrieben werden, um eine zweite, hohe Winkelauflösung zu erzielen, **dadurch gekennzeichnet, dass**, in wenigstens einem weiteren Betriebsmodus, wenigstens eine Teilantenne (28) des Sendemoduls (20) zusammen mit einer Gruppe von Teilantennen (46, 48, 50) des Empfangsmoduls (22), oder eine Gruppe von Teilantennen (26, 28, 30, 32, 34) des Sendemoduls (20) zusammen mit wenigstens einer Teilantenne (48) des Empfangsmoduls (22)betrieben wird.
